(19) **Europäisches Patentamt**
**European Patent Office**
**Office européen des brevets**

(11) **EP 3 279 984 B1**

(12) **EUROPEAN PATENT SPECIFICATION**

(45) Date of publication and mention
of the grant of the patent:
**21.10.2020 Bulletin 2020/43**

(21) Application number: **16772129.9**

(22) Date of filing: **08.03.2016**

(51) Int Cl.:
*H01M 4/66* (2006.01)    *C22C 21/02* (2006.01)
*C25D 9/12* (2006.01)    *C25F 3/04* (2006.01)
*H01G 11/68* (2013.01)    *H01G 11/70* (2013.01)
*B22D 11/049* (2006.01)    *C25F 3/02* (2006.01)
*C22C 21/00* (2006.01)    *C22C 1/02* (2006.01)
*H01G 11/28* (2013.01)

(86) International application number:
**PCT/JP2016/057177**

(87) International publication number:
**WO 2016/158245 (06.10.2016 Gazette 2016/40)**

(54) **ALUMINUM PLATE, AND CURRENT COLLECTOR FOR POWER STORAGE DEVICE**

ALUMINIUMPLATTE UND STROMABNEHMER FÜR STROMSPEICHERUNGSVORRICHTUNG

PLAQUE D'ALUMINIUM ET COLLECTEUR DE COURANT POUR UN DISPOSITIF DE STOCKAGE D'ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2015    JP 2015074150**
**31.07.2015    JP 2015152373**
**02.12.2015    JP 2015236064**
**08.02.2016    JP 2016021786**

(43) Date of publication of application:
**07.02.2018 Bulletin 2018/06**

(73) Proprietor: **FUJIFILM Corporation**
**Tokyo 106-8620 (JP)**

(72) Inventors:
• **MATSUURA Atsushi**
**Haibara-gun**
**Shizuoka 421-0396 (JP)**
• **KOMATSU Hiroshi**
**Haibara-gun**
**Shizuoka 421-0396 (JP)**
• **KAWAGUCHI Junji**
**Haibara-gun**
**Shizuoka 421-0396 (JP)**
• **SAWADA Hirokazu**
**Haibara-gun**
**Shizuoka 421-0396 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 555 289          EP-A1- 2 843 067**
**WO-A1-2010/029675          WO-A1-2010/100924**
**WO-A1-2011/004777          JP-A- 2009 064 770**
**JP-A- 2011 216 364          JP-A- 2011 249 150**
**JP-A- 2012 021 205          US-A1- 2010 027 193**
**US-A1- 2012 219 817**

• **ALUMINUM HANDBOOK 31 January 2007, page 19, XP009501308**
• **HAYASHI H: ALUMINUM HANDBOOK 7TH EDITION, JAPAN ALUMINUM ASSOCIATION, 31 January 2007 (2007-01-31), page 19, XP009501308,**
• **Aluminium-Zentrale: "aluminium-Knetwerkstoffe", , 1 January 2003 (2003-01-01), XP055671301, ISBN: 978-3-937171-00-5 Retrieved from the Internet: URL:http://www.aluinfo.de/files/_media/dok umente/Downloads/Technische%20Daten/Merk bl aetter/W2_Aluminium-Knetwerkstoffe.pdf [retrieved on 2020-02-24]**

**Description**

**BACKGROUND OF THE INVENTION**

1. Field of the Invention

The present invention relates to an aluminum plate and a collector for a storage device.

2. Description of the Related Art

In recent years, in response to the development of portable devices such as personal computers and mobile phones, hybrid vehicles, electric vehicles, and the like, the demand for storage devices (particularly, lithium ion capacitors, lithium ion secondary batteries, and electric double layer capacitors) as power supplies has increased.

It is known that, as electrode collectors that are used for positive electrodes or negative electrodes in the above-described storage devices (hereinafter, simply referred to as "the collectors"), aluminum plates are used.

For example, WO2011/004777A describes "an aluminum penetrated foil comprising Fe: 5 weight ppm to 80 weight ppm, Si: 5 weight ppm to 100 weight ppm, and Cu: 10 weight ppm to 100 weight ppm with a remainder being Al and inevitable impurities, wherein (1) a foil thickness is 50 $\mu$m or less, (2) a plurality of through-holes reaching a rear surface from a foil front surface are provided, and (3) a ratio [c/t] of a vertical through-hole occupancy c (%) in the aluminum penetrated foil to the foil thickness t ($\mu$m) is 1.4 or greater." ([Claim 1]) and also describes that the inner diameters of the through-holes are in a range of 0.2 $\mu$m to 5 $\mu$m ([Claim 3]) and, furthermore, describes the application of active materials to this aluminum penetrated foil ([0036]).

US 2012/219 817 A1 aims at providing an aluminium foil having a plurality of through holes and a foil strength, and a manufacturing method thereof. The perforated aluminium foil described here includes a plurality of through holes extending from a front surface to a back surface of the foil, and has: (1) a foil thickness of 50 $\mu$m or less; and (2) a tensile strength of [0.2foil thickness ($\mu$m)] N/10 mm or more. The method of manufacturing is characterized in that a perforated aluminium foil having a plurality of through holes is either embossed, or simultaneously stretched and bent.

EP 2 555 289 A1 aims at providing a metal foil for a negative electrode collector. The metal foil for a negative electrode collector has a plurality of openings that reach a foil rear surface from a foil front surface and has a region having a through hole density of 1000 holes/cm$^2$ or more.

**SUMMARY OF THE INVENTION**

As a result of studying the well-known aluminum plate of the related art which is described in WO2011/004777A and the like, the present inventors clarified that, depending on the alloy composition of aluminum, there are cases in which breaks, wrinkles, fractures, and the like are generated and the step suitability deteriorates, and, depending on the sizes of through-holes or the opening ratio, there are cases in which the working characteristics of aluminum plates to be produced deteriorate.

Therefore, an object of the present invention is to provide an aluminum plate which is excellent in terms of both the step suitability and the working characteristics and a collector for a storage device using the same.

As a result of intensive studies for achieving the above-described object, the present inventors found that aluminum plates having an average opening diameter of through-holes, an average opening ratio, and a content of Fe in specific ranges are excellent in terms of both the step suitability and the working characteristics and completed the present invention.

That is, it was found that the above-described object can be achieved using the following constitutions.

[1] An aluminum plate comprising: a plurality of through-holes formed in a thickness direction, in which a thickness of the aluminum plate is 40 $\mu$m or less, an average opening diameter of the through-holes is 0.1 to 100 $\mu$m, an average opening ratio by the through-holes is 2% to 30%, a content of Fe is 0.03% by mass or more, and a ratio of the content of Fe to a content of Si is 1.0 or more.

[2] The aluminum plate according to [1], in which recess portions which have an average opening diameter of 0.1 $\mu$m to 100 $\mu$m and are not penetrated are provided on at least one surface, and an occupancy ratio of the recess portions is 0.5% or more.

[3] The aluminum plate according to [1] or [2], in which an arithmetic average roughness Ra of the surface is 0.2 $\mu$m or more.

[4] The aluminum plate according to any one of [1] to [3], in which the aluminum plate has a rectangular shape or a square shape, and the average opening ratio by the through-holes is 0% to 5% at peripheral portions of at least one pair of opposite sides out of two pairs of the opposite sides.

Here, the peripheral portion refers to a region covering 50 mm from an end portion of the aluminum plate which constitutes a side.

[5] The aluminum plate according to any one of [1] to [3], in which the aluminum plate has a rectangular shape, and the average opening ratio by the through-holes is 0% to 5% at peripheral portions of two opposite sides in a width direction.

Here, the peripheral portion refers to a region covering 50 mm from an end portion of the aluminum plate which constitutes a side.

[6] The aluminum plate according to any one of [1] to [3], in which the aluminum plate has a roll shape, and the average opening ratio by the through-holes is 0% to 5% at peripheral portions of two opposite sides in an axial direction of the roll.

Here, the peripheral portion refers to a region covering 50 mm from an end portion of the aluminum plate which constitutes a side.

[7] A collector for a storage device made of an aluminum plate having a plurality of through-holes in a thickness direction, in which the aluminum plate is the aluminum plate according to anyone of [1] to [6].

As described below, according to the present invention, it is possible to provide an aluminum plate which is excellent in terms of both the step suitability and the working characteristics and a collector for a storage device using the same.

## BRIEF DESCRIPTION OF THE DRAWINGS

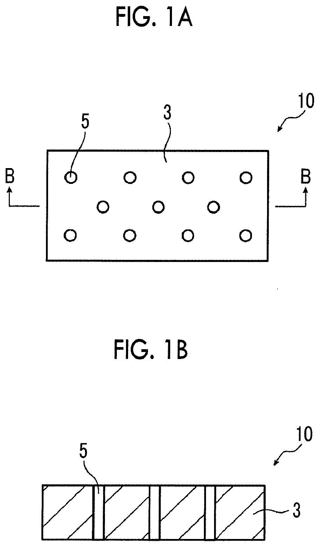

FIG. 1A is a schematic top view illustrating an example of an aluminum plate of the present invention.

FIG. 1B is a cross-sectional view in a direction of a B-B line in FIG. 1A.

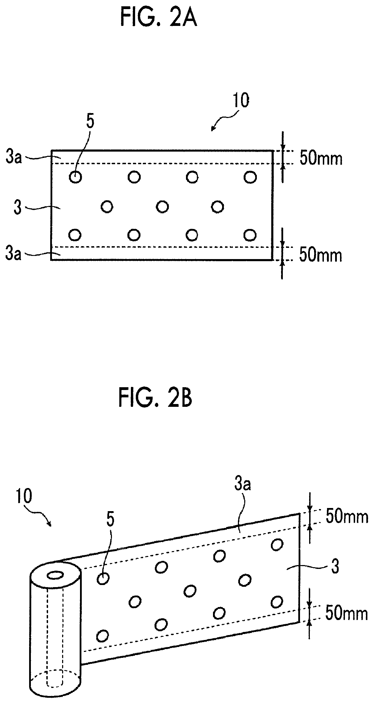

FIG. 2A is a schematic top view illustrating an example (having a rectangular shape) of an embodiment of the aluminum plate of the present invention.

FIG. 2B is a schematic perspective view illustrating an example (having a roll shape) of the embodiment of the aluminum plate of the present invention.

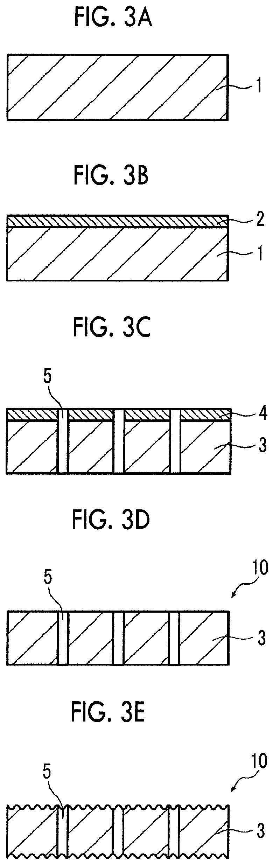

FIG. 3A is a schematic cross-sectional view of an aluminum substrate out of schematic cross-sectional views for describing an example of a preferred method for manufacturing an aluminum plate of the present invention.

FIG. 3B is a schematic cross-sectional view illustrating a state in which a membrane-forming treatment is carried out on an aluminum substrate and an aluminum hydroxide membrane is formed on a front surface out of the schematic cross-sectional views for describing the example of the preferred method for manufacturing an aluminum plate of the present invention.

FIG. 3C is a schematic cross-sectional view illustrating a state in which an electrochemical dissolution treatment is carried out after the membrane-forming treatment and through-holes are formed in the aluminum substrate and the aluminum hydroxide membrane out of the schematic cross-sectional views for describing the example of the preferred method for manufacturing an aluminum plate of the present invention.

FIG. 3D is a schematic cross-sectional view illustrating a state in which the aluminum hydroxide membrane is removed after the electrochemical dissolution treatment out of the schematic cross-sectional views for describing the example of the preferred method for manufacturing an aluminum plate of the present invention.

FIG. 3E is a schematic cross-sectional view illustrating a state in which the electrochemical roughening treatment is further carried out after the aluminum hydroxide membrane has been removed out of the schematic cross-sectional views for describing the example of the preferred method for manufacturing an aluminum plate of the present invention.

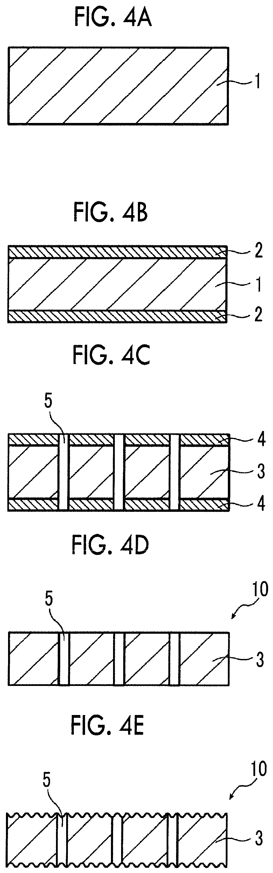

FIG. 4A is a schematic cross-sectional view of the aluminum substrate out of schematic cross-sectional views for describing another example of the preferred method for manufacturing an aluminum plate of the present invention.

FIG. 4B is a schematic cross-sectional view illustrating a state in which the membrane-forming treatment is carried out on the aluminum substrate and aluminum hydroxide membranes are formed on a front surface and a rear surface out of the schematic cross-sectional views for describing another example of the preferred method for manufacturing an aluminum plate of the present invention.

FIG. 4C is a schematic cross-sectional view illustrating a state in which the electrochemical dissolution treatment is carried out after the membrane-forming treatment and the through-holes are formed in the aluminum substrate and the aluminum hydroxide membrane out of the schematic cross-sectional views for describing another example of the preferred method for manufacturing an aluminum plate of the present invention.

FIG. 4D is a schematic cross-sectional view illustrating a state in which the aluminum hydroxide membrane is removed after the electrochemical dissolution treatment out of the schematic cross-sectional views for describing another example of the preferred method for manufacturing an aluminum plate of the present invention.

FIG. 4E is a schematic cross-sectional view illustrating a state in which the electrochemical roughening treatment is further carried out after the aluminum hydroxide membrane has been removed out of the schematic cross-sectional views for describing another example of the preferred method for manufacturing an aluminum plate of the present invention.

## DESCRIPTION OF THE PREFERRED EMBODIMENTS

Hereinafter, the present invention will be described in detail.

In the following description, there are cases in which constitutional requirements will be described on the basis of typical embodiments of the present invention, but the present invention is not limited to the above-described embodiments.

Meanwhile, in the present specification, numeric ranges expressed using "to" include numeric values before and after "to" as the lower limit value and the upper limit value.

[Aluminum plate]

An aluminum plate of the present invention is an aluminum plate having a plurality of through-holes formed in the thickness direction, in which the thickness of the aluminum plate is 40 μm or less, the average opening diameter of the through-holes is 0.1 to 100 μm, the average opening ratio by the through-holes is 2% to 30%, the content of Fe is 0.03% by mass or more, and the ratio of the content of Fe to the content of Si (hereinafter, also referred to as "the content ratio (Fe/Si)") is 1.0 or more.

Here, the thickness of the aluminum plate refers to the average value of thicknesses measured at arbitrary five points using a contact-type film thickness measurement instrument (digital electronic micrometer).

In addition, the average opening diameter of the through-holes is obtained by capturing an image of the front surface of the aluminum plate from the above using a high-resolution scanning electron microscope (SEM) at a magnification of 100 to 10,000 times, extracting at least 20 through-holes having a periphery that continues in a circular shape, scanning the diameters as opening diameters, and computing the average value thereof.

Meanwhile, the magnification can be appropriately selected from the above-described range so that an SEM image from which 20 or more through-holes can be extracted can be obtained. In addition, as the opening diameter, the maximum value of the distance between the end portions of a through-hole portion was measured. That is, the shape of the opening portion of the through-hole is not limited to a substantially circular shape, and, in a case in which the shape of the opening portion is a non-circular shape, the maximum value of the distance between the end portions of the through-hole is considered as the opening diameter. Therefore, for example, even in the case of a through-hole having a shape in which two or more through-holes are integrated together, the through-hole is considered as one through-hole, and the maximum value of the distance between the end portions of the through-hole portion is considered as the opening diameter.

In addition, the average opening ratio by the through-holes is obtained by installing a parallel light optical unit on one surface side of the aluminum plate, transmitting parallel light, capturing an image of the front surface of the aluminum substrate using an optical microscope at a magnification of 100 times from the other surface of the aluminum substrate, computing the ratios (the opening area/the geometric area) from the sum of the opening areas of the through-holes and the area of five 100 mm×75 mm views (the geometric area) at five places in a 10 cm×10 cm range of the obtained image, and computing the average value of the ratios at the respective views (five places).

In the present invention, in a case in which the average opening diameter of the through-holes, the average opening ratio, the content of Fe, and the content ratio (Fe/Si) are in the above-described ranges, both the step suitability and the working characteristics become favorable even in a thickness of 40 μm or less.

The detail of what has been described above is not clear, but the present inventors assume as described below.

That is, it is considered that, in a case in which the content of Fe, and the content ratio (Fe/Si) are in the above-described ranges, both the breaking strength and breaking elongation of the aluminum plate improve, and the step suitability becomes favorable. This can be assumed from the results described in Comparative Examples 1 and 2.

In addition, it is considered that, in a case in which the average opening diameter of the through-holes and the average opening ratio are in the above-described ranges, the balance between the breaking strength and breaking elongation of the aluminum plate becomes favorable, and the step suitability becomes favorable. This can be assumed from the results described in Comparative Examples 3 to 5.

Next, the overall constitution of the aluminum plate of the present invention will be described using FIGS. 1A and 1B and FIGS. 2A and 2B, and then individual specific constitutions will be described.

An aluminum plate 10 illustrated in FIGS. 1A and 1B is an aluminum substrate 3 having a plurality of through-holes 5 in the thickness direction. Meanwhile, in the present specification, "aluminum substrate" refers to a substrate used for the production of the aluminum plate of the present invention, and "aluminum substrate having through-holes" refers to a substrate included in the concept of the aluminum plate of the present invention.

In addition, the aluminum plate 10 illustrated in FIG. 2A has a rectangular shape and illustrates an example in which the average opening ratio by through-holes is 0% at peripheral portions 3a of at least one pair of two opposite sides out of two pairs of two sides opposite to each other in the width direction.

Similarly, the aluminum plate 10 illustrated in FIG. 2B has a roll shape and illustrates an example in which the average opening ratio by through-holes is 0% at the peripheral portions 3a of two sides opposite to each other in the axial direction of a roll (the width direction of a long aluminum plate constituting the roll).

[Substrate (aluminum alloy)]

The substrate (aluminum alloy) of the aluminum plate of the present invention is not particularly limited as long as the substrate is an aluminum alloy having a content of Fe of 0.03% by mass or more and a content ratio (Fe/Si) of 1.0 or more, and, for example, well-known aluminum alloys such as 3000-series aluminum alloys (for example, 3003 material and the like) and 8000-series aluminum alloys (for example, 8021 material and the like) can be used.

As the above-described aluminum alloys, for example, aluminum alloys having an alloy number shown in Table 1 can be used.

[Table 1]

| Table 1 | Si | Fe | Cu |
|---|---|---|---|
| Alloy No. | (% by mass) | (% by mass) | (% by mass) |
| 1085 | 0.02 | 0.04 | <0.01 |
| 1N30 | 0.11 | 0.45 | 0.02 |
| 8021 | 0.04 | 1.44 | <0.01 |
| 3003 | 0.60 | 0.70 | 0.10 |

In the present invention, from the viewpoint of the tensile strength and the elongation, the content of Fe is preferably 0.03% to 3.00% by mass and more preferably 0.03% to 2.0% by mass.

In addition, from the viewpoint of the elongation, the content ratio (Fe/Si) is preferably 1.0 to 100.0 and more preferably 2.0 to 50.0. Meanwhile, from the viewpoint of the elongation, it is preferable to carry out thermal softening on the aluminum substrate during rolling or after the end of rolling.

[Through-holes]

For the through-holes in the aluminum plate of the present invention, as described above, the average opening diameter of the through-holes is 0.1 to 100 $\mu$m, and the average opening ratio by the through-holes is 2% to 30%.

Here, the average opening diameter of the through-holes is preferably 5 to 50 $\mu$m and more preferably 8 to 30 $\mu$m since the adhesiveness to active material layers becomes favorable in a case in which the aluminum plate of the present invention is used as a collector.

In addition, the average opening ratio by the through-holes is preferably 2% to 30% and more preferably 4% to 20% since the predoping property of lithium becomes favorable and favorable handleability can be obtained in a case in which the aluminum plate of the present invention is used as a collector.

In the present invention, in a case in which the shape of the aluminum plate is a rectangular shape or a square shape, since the step suitability becomes favorable, the average opening ratio by the through-holes is preferably 0% to 5% at the peripheral portions of at least one pair of opposite sides out of two pairs of opposite sides. Meanwhile, there is an assumption that the average opening ratio at the peripheral portions is equal to or less than the specific value of the average opening ratio (2% to 30%) of all including the peripheral portions.

Here, the "peripheral portion" refers to a region covering 50 mm (in width) from the end portion of the aluminum plate which constitutes a side.

In addition, "the average opening ratio being 0%" indicates that there are no through-holes in the peripheral portions. Meanwhile, as described above, the aluminum plate 10 illustrated in FIG. 2A is an example in which the average opening ratio by the through-holes at the peripheral portions 3a of at least one pair of two opposite sides is 0%.

Furthermore, peripheral portions at which the average opening ratio by the through-holes reaches 0% to 5% are preferably provided at the peripheral portions of two sides opposite to each other in a direction (width direction) perpendicular to the transportation direction in a process for manufacturing the aluminum plate out of two pairs of two opposite sides.

In addition, in the present invention, in a case in which the shape of the aluminum plate is a long shape, since the step suitability becomes favorable, the average opening ratio by the through-holes is preferably 0% to 5% at the peripheral portions of two sides opposite to each other in the width direction.

For the same reason, in a case in which the shape of the aluminum plate is a roll shape, since the step suitability becomes favorable, the average opening ratio by the through-holes is preferably 0% to 5% at the peripheral portions of two sides opposite to each other in the axial direction of the roll (the width direction of the long aluminum plate constituting the roll).

In the present invention, since the adhesiveness to active material layers becomes favorable in a case in which the aluminum plate of the present invention is used as a collector, the ratio of through-holes having an opening diameter of 5 $\mu$m or less to the through-holes is preferably 50% or less.

Here, the ratio of through-holes having an opening diameter of 5 $\mu$m or less is obtained by capturing an SEM image using the same method as in the measurement of the above-described average opening diameter of the through-holes, measuring the opening diameters of all through-holes at 30 mm×30 mm views in five places in a 10 cm×10 cm range of the obtained SEM image, and computing the ratio of the number of through-holes having an opening diameter of 5 $\mu$m or less to the number of all through-holes measured.

In addition, in the present invention, since the adhesiveness to active material layers becomes favorable in a case in which the aluminum plate of the present invention is used as a collector, the ratio of through-holes having an opening diameter of more than 30 $\mu$m preferably reaches 1% or more, and, since not only the adhesiveness but also the coatability in the case of forming active material layers also becomes favorable, the ratio more preferably reaches 20% or more.

Here, "the ratio of through-holes having an opening diameter of more than 30 $\mu$m" is obtained by capturing an SEM image using the same method as in the measurement of the above-described average opening diameter of the through-holes, measuring the opening diameters of all through-holes at 30 mm×30 mm views in five places in a 10 cm×10 cm range of the obtained SEM image, and computing the ratio of the number of through-holes having an opening diameter of more than 30 $\mu$m to the number of all through-holes measured.

[Thickness]

The thickness of the aluminum plate of the present invention is 40 $\mu$m or less as described above.

In the present invention, from the viewpoint of the handleability, the coatability, and the mounting thickness in a case in which the aluminum plate of the present invention is used as a collector, the thickness of the aluminum plate is preferably 6 to 40 $\mu$m and more preferably 8 to 30 $\mu$m.

[Tensile characteristics]

In the present invention, from the viewpoint of the handleability, the tensile strength, breaking elongation, and proof stress of the aluminum plate are preferably values described below.

Here, the tensile strength, the breaking elongation, and the proof stress refer to values measured using a method described in "Metallic materials-Tensile Testing-Method of test at room temperature" standardized by JIS Z 2241:2011. Meanwhile, regarding the shape of a test specimen that is used for these measurements, a No. 5 test specimen (JIS Z2241:2011) is used, the tensile rate is 2 mm/min, and AGS-H (5 KN) manufactured by Shimadzu Corporation is used as a tester. In addition, the proof stress is considered as a stress at which the aluminum plate plastically deforms 0.2% which is measured using an offset method.

<Tensile strength>

In the aluminum plate of the present invention, the tensile strength is preferably 15 to 350 N/mm$^2$ and more preferably 30 to 270 N/mm$^2$. Meanwhile, the strength per unit width is 3 to 30 N/cm$^2$ and more preferably 6 to 20 N/cm$^2$.

<Breaking elongation>

In the aluminum plate of the present invention, the breaking elongation is preferably 0.3% or more and more preferably 0.3% to 3.0%.

<Proof stress>

In the aluminum plate of the present invention, the proof stress is preferably 5 N/mm$^2$ or more and more preferably 10 to 150 N/mm$^2$.

Meanwhile, in the present invention, in a case in which the thickness of the aluminum plate of the present invention is 6 to 40 $\mu$m, it becomes possible to satisfy the respective values (the above-described widest numerical ranges) of the above-described tensile strength, breaking elongation, and proof stress.

[Recess portions]

In the present invention, since the contact areas with active material layers or undercoats increase and thus the adhesiveness becomes more favorable, and storage devices having favorable device characteristics such as output characteristics, cyclic characteristics, and rate characteristics can be produced, recess portions which have an average opening diameter of 0.1 $\mu$m to 100 $\mu$m and are not penetrated are preferably provided on at least one surface of the aluminum plate at a ratio at which the occupancy ratio reaches 0.5% or more. Meanwhile, these recess portions can be formed by carrying out an arbitrary roughening treatment in the above-described manufacturing method of the present invention.

Here, the average opening diameter of the recess portions is obtained by capturing an image of the surface of the aluminum substrate from the above using a high-resolution scanning electron microscope (SEM) at a magnification of 200 to 10,000 times, extracting at least 20 recess portions (pits) having an uneven structure the periphery of which continues in a circular shape (extracting all recess portions in a case in which there are less than 20 recess portions) from the obtained SEM image, scanning the diameters as opening diameters, and computing the average value thereof. Meanwhile, as the opening diameter, the maximum value of the distance between the end portions of an opening portion of a recess portion was measured. That is, the shape of the opening portion of the through-hole is not limited to a substantially circular shape, and, in a case in which the shape of the opening portion is a non-circular shape, the maximum value of the distance between the end portions of the recess portion is considered as the opening diameter. Therefore, for example, even in the case of a recess portion having a shape in which two or more recess portions are integrated together, the recess portion is considered as one recess portion, and the maximum value of the distance between the end portions of the opening portion is considered as the opening diameter.

In addition, the occupancy ratio of the recess portions is obtained in the same manner as the average opening diameter of the recess portions by computing the ratios (the opening area of the recess portions/(the geometric area-the opening area of the through-holes)) from the sum of the opening areas of the recess portions having the above-described opening diameter and the area of the surface obtained by subtracting the opening area of the through-holes from the area of five 100 mm$\times$75 mm views (the geometric area) at five places in a 10 cm$\times$10 cm range of the obtained image, and computing the average value of the ratios at the respective views (five places).

In addition, the average opening diameter of the recess portions is preferably 0.2 $\mu$m to 20 $\mu$m.

Similarly, the occupancy ratio of the recess portions is preferably 30% to 100%.

In addition, the density of the recess portions is preferably 2 recess portions/mm$^2$ to 10$^8$ recess portions/mm$^2$ and preferably 2 recess portions/mm$^2$ to 10$^6$ recess portions/mm$^2$.

Here, the density of the recess portions is obtained in the same manner as the average opening diameter of the recess portions by counting the number of through-holes in five 100 mm$\times$75 mm views at five places in a 10 cm$\times$10 cm range of the obtained image, converting the counted number to the number per square millimeter (mm$^2$), and computing the average value of the numbers at the respective views (five places).

[Arithmetic average roughness Ra]

In the present invention, the arithmetic average roughness Ra of the aluminum plate is preferably 0.2 $\mu$m or more and more preferably 0.2 to 1.5 $\mu$m.

In a case in which the arithmetic average roughness Ra is 0.2 $\mu$m or more, since the adhesiveness to active material layers further improves, and the surface area increases and thus the contact area increases, the capacity maintenance ratios or output characteristics of storage devices (particularly, lithium ion secondary batteries, lithium ion capacitors, and the like) for which aluminum plates (collectors) obtained using the manufacturing method of the present invention are used enhance.

Here, the arithmetic average roughness Ra refers to the average value of arithmetic average roughness values measured at five places using a contact-type (sensing pin-type) surface roughness meter (for example, SURFCOM 480A manufactured by Tokyo Seimitsu Co., Ltd.) with a sensing pin $\phi$ of 2 $\mu$mR, a cut-off wavelength of 0.8 mm, a measurement rate of 0.3 mm/S, and a measurement length of 3 mm (ISO' 97 standards).

[Specific surface area ΔS]

In the present invention, the specific surface area ΔS of the aluminum plate is preferably 2% or more and more preferably 5% to 80%.

In a case in which the specific surface area ΔS is 2% or more, the contact area with active material layers or undercoats increases and thus the adhesiveness becomes more favorable, and storage devices having favorable output characteristics, cycle characteristics, rate characteristics, and the like can be produced.

Here, the specific surface area ΔS is a value obtained using Expression (i) from an actual area $S_x$ which is obtained using a three-point approximation method from three-dimensional data that are obtained by measuring areas at $512\times128$ points in a surface range of $25\ \mu m\times25\ \mu m$ using an atomic force microscope and a geometric measurement area So.

$$\Delta S = (S_x - S_0)/S_0 \times 100\ (\%) \quad \cdots \qquad (i)$$

In addition, in the present invention, in order to obtain the specific surface area ΔS, the surface shape is measured using an atomic force microscope (AFM), thereby obtaining three-dimensional data. The measurement is carried out, for example, under the following conditions.

That is, a 1 cm×1 cm specimen is cut out from the aluminum plate and set in a horizontal specimen table on a piezo scanner, a cantilever is brought close to the specimen surface, scanning is carried out in the XY direction when the cantilever reaches a region in which the atomic force works, and, at this time, the surface shape (wave structure) of the specimen is captured as a displacement of piezo in the Z direction. As the piezo scanner, a scanner capable of scanning $150\ \mu m$ in the XY direction and $10\ \mu m$ in the Z direction is used. As the cantilever, a cantilever having a resonance frequency of 120 to 150 kHz and a spring constant of 12 to 20 N/m (SI-DF20, manufactured by NANOPROBE Co., Ltd.) is used, and the surface shape is measured in a dynamic force mode (DFM). In addition, the slight slope of the specimen is corrected by means of the least square approximation of the obtained three-dimensional data, thereby obtaining a reference surface. In the case of the measurement, $512\times128$ points arc measured in a surface range of $25\ \mu m\times25\ \mu m$. The resolution in the XY direction is set to $1.9\ \mu m$, the resolution in the Z direction is set to 1 nm, and the scanning rate is set to $60\ \mu m/sec$.

Three adjacent points are extracted using the three-dimensional data (f(x, y)) obtained above, and the sum of the area of the least triangle formed by these three points is obtained and considered as the actual area $S_x$. The surface area difference ΔS is obtained using Expression (i) from the obtained actual area $S_x$ and the geometric measurement area So.

[Method for manufacturing aluminum plate]

Next, a method for manufacturing an aluminum plate of the present invention will be described.

The method for manufacturing an aluminum plate is a method for manufacturing an aluminum plate having a plurality of through-holes in the thickness direction including a membrane-forming step of forming a membrane including aluminum hydroxide as a main component on the surface of an aluminum substrate, a through-hole-forming step of forming through-holes by carrying out a through-hole-forming treatment after the membrane-forming step, and a membrane-removing step of removing the aluminum hydroxide membrane after the through-hole-forming step.

Next, the respective steps of the method for manufacturing an aluminum plate will be described using FIGS. 3A to 3E and FIGS. 4A to 4E, and then the respective steps will be described in detail.

FIGS. 3A to 3E and FIGS. 4A to 4E are schematic sectional views illustrating examples of a preferred embodiment of the method for manufacturing an aluminum plate.

As illustrated in FIGS. 3A to 3E and FIGS. 4A to 4E, the method for manufacturing an aluminum plate is a method for manufacturing an aluminum plate including a membrane-forming step of forming an aluminum hydroxide membrane 2 by carrying out a membrane-forming treatment on one main surface (both main surfaces in an aspect illustrated in FIG. 4) of an aluminum substrate 1 (FIGS. 3A and 3B and FIGS. 4A and 4B), a through-hole-forming step of forming through-holes 5 by carrying out an electrolytic dissolution treatment after the membrane-forming step and producing an aluminum plate having an aluminum substrate 3 having the through-holes and an aluminum hydroxide membrane 4 having the through-holes (FIGS. 3B and 3C and FIGS. 4B and 4C), and a membrane-removing step of removing the aluminum hydroxide membrane 4 having the through-holes after the through-hole-forming step and producing the aluminum plate 10 made of the aluminum substrate 3 having the through-holes (FIGS. 3C and 3D and FIGS. 4C and 4D).

In addition, the method for manufacturing an aluminum plate preferably includes a roughening treatment step of carrying out an electrochemical roughening treatment on the aluminum substrate 3 having the through-holes after the membrane-removing step and producing the aluminum plate 10 having the roughened surface (FIGS. 3D and 3E and FIGS. 4D and 4E).

[Membrane-forming step]

In the present invention, the membrane-forming step in the method for manufacturing an aluminum plate is a step of forming an aluminum hydroxide membrane by carrying out a membrane-forming treatment on the surface of the aluminum substrate.

<Membrane film-forming treatment>

The above-described membrane-forming treatment is not particularly limited, and it is possible to carry out, for example, the same treatment as a well-known aluminum hydroxide membrane-forming treatment of the related art.

As the membrane-forming treatment, it is possible to employ, for example, conditions or devices described in Paragraphs "0013" to "0026" of JP2011-201123A.

In the present invention, the conditions of the membrane-forming treatment vary in diverse manners depending on electrolytic solutions being used and thus cannot be determined uniformly; however, generally, the concentration of an electrolytic solution in a range of 1% by mass to 80% by mass, the liquid temperature in a range of 5°C to 70°C, the current density in a range of 0.5 A/dm$^2$ to 60 A/dm$^2$, the voltage in a range of 1 V to 100 V, and the electrolysis duration in a range of 1 second to 20 minutes are appropriate and are adjusted so as to obtain a desired amount of a membrane.

In the present invention, an electrochemical treatment is preferably carried out using nitric acid, hydrochloric acid, sulfuric acid, phosphoric acid, oxalic acid, or an acid mixture of two or more acids described above as an electrolytic solution.

In a case in which an electrochemical treatment is carried out in an electrolytic solution including nitric acid and hydrochloric acid, direct current or alternating current may be applied between the aluminum substrate and a counter electrode. In a case in which direct current is applied to the aluminum substrate, the current density is preferably 1 to 60 A/dm$^2$ and more preferably in a range of 5 to 50 A/dm$^2$. In a case in which the electrochemical treatment is continuously carried out, the electrochemical treatment is preferably carried out using a liquid power feeding method in which power is fed to the aluminum substrate through an electrolytic solution.

In the present invention, the amount of the aluminum hydroxide membrane being formed by means of the membrane-forming treatment is preferably in a range of 0.05 to 50 g/m$^2$ and more preferably in a range of 0.1 to 10 g/m$^2$.

[Through-hole-forming step]

The through-hole-forming step is a step in which an electrolytic dissolution treatment is carried out after the membrane-forming step, thereby forming through-holes.

<Electrolytic dissolution treatment>

The above-described electrolytic dissolution treatment is not particularly limited, and it is possible to use direct current or alternating current and use an acidic solution as an electrolytic solution. Among acidic solutions, the electrochemical treatment is preferably carried out using at least one of nitric acid or hydrochloric acid, and the electrochemical treatment is more preferably carried out using at least one acid mixture of sulfuric acid, phosphoric acid, and oxalic acid in addition to these acids.

In the present invention, as the acidic solution which is the electrolytic solution, it is possible to use, in addition to the above-described acids, electrolytic solutions described in the respective specifications of US4,671,859A, US4,661,219A, US4,618,405A, US4,600,482A, US4,566,960A, US4,566,958A, US4,566,959A, US4,416,972A, US4,374,710A, US4,336,113A, and US4,184,932A.

The concentration of the acidic solution is preferably in a range of 0.1% by mass to 2.5% by mass and more preferably in a range of 0.2% by mass to 2.0% by mass. In addition, the liquid temperature of the acidic solution is preferably in a range of 20°C to 80°C and more preferably in a range of 30°C to 60°C.

In addition, as an aqueous solution including the above-described acid as a main body, it is possible to use an aqueous solution obtained by adding at least one of a nitric acid compound having nitric acid ions such as aluminum nitrate, sodium nitrate, or ammonium nitrate, a hydrochloric acid compound having hydrochloric acid ions such as aluminum chloride, sodium chloride, or ammonium chloride, or a sulfuric acid compound having sulfuric acid ions such as aluminum sulfate, sodium sulfate, or ammonium sulfate to an aqueous solution of the acid which has a concentration of 1 to 100 g/L so as to obtain a concentration in a range of 1 g/L to saturation.

In addition, the aqueous solution including the acid as the main body may contain metals which are included in an aluminum alloy such as iron, copper, manganese, nickel, titanium, magnesium, and silica. Preferably, a liquid obtained by adding aluminum chloride, aluminum nitrate, aluminum nitrate, or the like to an aqueous solution of the acid having a concentration in a range of 0.1 to 2% by mass so that the concentration of aluminum ions falls in a range of 1 to 100 g/L is preferably used.

In the electrochemical dissolution treatment, direct current is mainly used; however, in a case in which alternating current is used, the alternating-current power source wave is not particularly limited, and a sine wave, a square wave, a trapezoidal wave, a triangular wave, and the like can be used, and, among these, a square wave or a trapezoidal wave is preferred, and a trapezoidal wave is particularly preferred.

(Nitric acid electrolysis)

In the present invention, it is possible to easily form through-holes which have an average opening diameter of 0.1 $\mu$m or more and less than 100 $\mu$m and the maximum diameter Ra inside by means of an electrochemical dissolution treatment in which an electrolytic solution including nitric acid as a main body is used (hereinafter, also abbreviated as "the nitric acid dissolution treatment").

Here, the nitric acid dissolution treatment is preferably an electrolysis treatment which is carried out using direct current under conditions of an average current density set to 5 A/dm$^2$ or higher and a quantity of electricity set to 50 C/dm$^2$ or greater since it is easy to control dissolution points of through-hole formation. Meanwhile, the average current density is preferably 100 A/dm$^2$ or lower, and the quantity of electricity is preferably 10,000 C/dm$^2$ or less.

In addition, the concentration or temperature of the electrolytic solution in the nitric acid electrolysis is not particularly limited, and it is possible to carry out electrolysis using a nitric acid electrolytic solution having a high concentration, for example, a nitric acid concentration in a range of 15% by mass to 35% by mass at 30°C to 60°C or carry out electrolysis using a nitric acid electrolytic solution having a nitric acid concentration in a range of 0.7% by mass to 2% by mass at a high temperature, for example, at 80°C or higher.

In addition, the electrolysis can be carried out using an electrolytic solution obtained by mixing at least one of sulfuric acid, oxalic acid, or phosphoric acid having a concentration of 0.1% to 50% by mass with the nitric acid electrolytic solution.

(Hydrochloric acid electrolysis)

In the present invention, it is also possible to easily form through-holes which have an average opening diameter in a range of 1 $\mu$m or more and less than 100 $\mu$m and the maximum diameter Ra inside by means of an electrochemical dissolution treatment in which an electrolytic solution including hydrochloric acid as a main body is used (hereinafter, also abbreviated as "the hydrochloric acid dissolution treatment").

Here, the hydrochloric acid dissolution treatment is preferably an electrolysis treatment which is carried out using direct current under conditions of an average current density set to 5 A/dm$^2$ or higher and a quantity of electricity set to 50 C/dm$^2$ or greater since it is easy to control dissolution points of through-hole formation. Meanwhile, the average current density is preferably 100 A/dm$^2$ or lower, and the quantity of electricity is preferably 10,000 C/dm$^2$ or less.

In addition, the hydrochloric acid concentration or temperature of the electrolytic solution is not particularly limited, and it is possible to carry out electrolysis using a hydrochloric acid electrolytic solution having a high concentration, for example, a hydrochloric acid concentration in a range of 10% by mass to 35% by mass at 30°C to 60°C or carry out electrolysis using a hydrochloric acid electrolytic solution having a hydrochloric acid concentration in a range of 0.7% by mass to 2% by mass at a high temperature, for example, at 80°C or higher.

In addition, the electrolysis can be carried out using an electrolytic solution obtained by mixing at least one of sulfuric acid, oxalic acid, or phosphoric acid having a concentration of 0.1% to 50% by mass with the hydrochloric acid electrolytic solution.

[Membrane-removing step]

The membrane-removing step is a step of removing the aluminum hydroxide membrane by carrying out a chemical dissolution treatment.

In the membrane-removing step, the aluminum hydroxide membrane can be removed by carrying out, for example, an acid etching treatment or an alkali etching treatment which will be described below.

<Acid etching treatment>

The above-described dissolution treatment is a treatment in which the aluminum hydroxide membrane is dissolved using a solution that dissolves aluminum hydroxide earlier than aluminum (hereinafter, referred to as "the aluminum hydroxide dissolution liquid").

Here, the aluminum hydroxide dissolution liquid is preferably an aqueous solution including at least one selected from a group consisting of, for example, nitric acid, hydrochloric acid, sulfuric acid, phosphoric acid, oxalic acid, chromium compounds, zirconium-based compounds, titanium-based compounds, lithium salts, cerium salts, magnesium salts, sodium silicofluoride, zinc fluoride, manganese compounds, molybdenum compounds, magnesium compounds, barium compounds, and halogen single bodies.

Specific examples of the chromium compounds include chromium (III) oxide, anhydrous chromium (VI) acid, and the like.

Examples of the zirconium-based compounds include ammonium fluorozirconate, zirconium fluoride, and zirconium chloride.

Examples of the titanium compounds include titanium oxide and titanium sulfide.

Examples of the lithium salts include lithium fluoride and lithium chloride.

Examples of the cerium salts include cerium fluoride and cerium chloride.

Examples of the magnesium salts include magnesium sulfide.

Examples of the manganese compounds include sodium permanganate and calcium permanganate.

Examples of the molybdenum compounds include sodium molybdate.

Examples of the magnesium compounds include magnesium fluoride·pentahydrate.

Examples of the barium compounds include barium oxide, barium acetate, barium carbonate, barium chlorate, barium chloride, barium fluoride, barium iodide, barium lactate, barium oxalate, barium perchlorate, barium selenate, barium selenite, barium stearate, barium sulfite, barium titanate, barium hydroxide, barium nitrate, hydrates thereof, and the like.

Among the above-described barium compounds, barium oxide, barium acetate, and barium carbonate are preferred, and barium oxide is particularly preferred.

Examples of the halogen single bodies include chlorine, fluorine, and bromine.

Among these, the aluminum hydroxide dissolution liquid is preferably an aqueous solution containing an acid, examples of the acid include nitric acid, hydrochloric acid, sulfuric acid, oxalic acid, and the like, and the acid may be a mixture of two or more acids. Among these, nitric acid is preferably used as the acid.

The concentration of the acid is preferably 0.01 mol/L or higher, more preferably 0.05 mol/L or higher, and still more preferably 0.1 mol/L or higher. There is no particular upper limit, and the upper limit is generally 10 mol/L or lower and more preferably 5 mol/L or lower.

The dissolution treatment is carried out by bringing the aluminum substrate on which the aluminum hydroxide membrane is formed into contact with the above-described dissolution liquid. A method for bringing the aluminum substrate into contact with the alumina dissolution liquid is not particularly limited, and examples thereof include a dipping method and a spraying method. Among these, the dipping method is preferred.

The dipping method is a treatment in which the aluminum substrate on which the aluminum hydroxide membrane is formed is dipped into the above-described dissolution liquid. During the dipping treatment, it is preferable to carry out stirring since the treatment is carried out evenly.

The duration of the dipping treatment is preferably 10 minutes or longer, more preferably one hour or longer, and still more preferably three hours or longer and five hours or longer.

<Alkali etching treatment>

The alkali etching treatment is a treatment in which the surface layer is dissolved by bringing the aluminum hydroxide membrane into contact with an alkali solution.

Examples of alkalis that can be used in the alkali solution include caustic alkalis and alkali metal salts. Specific examples of caustic alkalis include sodium hydroxide (caustic soda) and caustic potash. In addition, examples of alkali metal salts include alkali metal silicates such as sodium metasilicate, sodium silicate, potassium metasilicate, and potassium silicate; alkali metal carbonates such as sodium carbonate and potassium carbonate; alkali metal aluminate such as sodium aluminate and potassium aluminate; alkali metal aldonates such as sodium gluconate and potassium gluconate; and alkali metal hydrogenphosphate such as sodium diphosphate, potassium diphosphate, sodium triphosphate, and potassium triphosphate. Among these, solutions of caustic alkalis and solutions containing both caustic alkali and alkali metal aluminate are preferred from the viewpoint of the fast etching rates and the cheap prices. Particularly, an aqueous solution of sodium hydroxide is preferred.

The concentration of the alkali solution is preferably in a range of 0.1% by mass to 50% by mass and more preferably in a range of 0.2% by mass to 10% by mass. In a case in which the alkali solution has aluminum ions dissolved therein, the concentration of aluminum ions is preferably in a range of 0.01% by mass to 10% by mass and more preferably in a range of 0.1% by mass to 3% by mass. The temperature of the alkali solution is preferably in a range of 10°C to 90°C. The treatment duration is preferably in a range of 1 second to 120 seconds.

Examples of a method for bringing the aluminum hydroxide membrane into contact with the alkali solution include a method in which the aluminum substrate on which the aluminum hydroxide membrane is formed is passed through a tank including the alkali solution, a method in which the aluminum substrate on which the aluminum hydroxide membrane is formed is immersed in a tank including the alkali solution, and a method in which the alkali solution is sprayed to the surface (the aluminum hydroxide membrane) of the aluminum substrate on which the aluminum hydroxide membrane is formed.

[Roughening treatment step]

In the present invention, the arbitrary roughening treatment step which the method for manufacturing an aluminum plate may have is a step of roughening the front surface or the rear surface of the aluminum substrate by carrying out an electrochemical roughening treatment (hereinafter, also abbreviated as "the electrolytic roughening treatment") on the aluminum substrate from which the aluminum hydroxide membrane has been removed.

As described above, in a case in which the electrolytic roughening treatment is carried out, thereby roughening the surface of the aluminum substrate, since the adhesiveness to layers including active materials improves, and the surface area increases and thus the contact area increases, the capacity maintenance ratios of storage devices for which aluminum plates to be obtained (collectors) are used.

In the electrolytic roughening treatment, it is possible to appropriately employ, for example, conditions or devices described in Paragraphs "0041" to "0050" of JP2012-216513A.

In the above-described manufacturing method, after the aluminum hydroxide membrane is formed, the recess portions are also formed in the case of forming the through-holes, and, furthermore, the recess portions can be densely formed by carrying out a roughening treatment.

In addition, the present embodiment employs a constitution in which the roughening treatment is carried out after the formation of the through-holes, but the constitution is not limited thereto, and the through-holes may be formed after the roughening treatment.

<Nitric acid electrolysis>

In the present invention, it is possible to easily form recessed portions having an average opening diameter in a range of 0.5 $\mu$m to 3.0 $\mu$m at a density of 10 recess portions/100 $\mu$m$^2$ or higher by means of an electrochemical roughening treatment in which an electrolytic solution including nitric acid as a main body is used (hereinafter, also abbreviated as "the nitric acid electrolysis").

Here, the nitric acid electrolysis is preferably an electrolysis treatment which is carried out using alternating current under conditions of a peak current density set to 30 A/dm$^2$ or higher, an average current density set to 13 A/dm$^2$ or higher, and a quantity of electricity set to 150 C/dm$^2$ or greater since it becomes possible to form uniform recessed portions at a high density. Meanwhile, the peak current density is preferably 100 A/dm$^2$ or lower, the average current density is preferably 40 A/dm$^2$ or lower, and the quantity of electricity is preferably 400 C/dm$^2$ or less.

In addition, the concentration or temperature of the electrolytic solution in the nitric acid electrolysis is not particularly limited, and it is possible to carry out electrolysis using a nitric acid electrolytic solution having a high concentration, for example, a nitric acid concentration in a range of 15% by mass to 35% by mass at 30°C to 60°C or carry out electrolysis using a nitric acid electrolytic solution having a nitric acid concentration in a range of 0.7% by mass to 2% by mass at a high temperature, for example, at 80°C or higher.

<Hydrochloric acid electrolysis>

In the present invention, it is possible to form recessed portions having an average opening diameter in a range of 0.5 $\mu$m to 3.0 $\mu$m at a density of 10 recess portions/100 $\mu$m$^2$ or higher by means of an electrochemical roughening treatment in which an electrolytic solution including hydrochloric acid as a main body is used (hereinafter, also abbreviated as "the hydrochloric acid electrolysis").

Here, the hydrochloric acid electrolysis is preferably an electrolysis treatment which is carried out using alternating current under conditions of a peak current density set to 30 A/dm$^2$ or higher, an average current density set to 13 A/dm$^2$ or higher, and a quantity of electricity set to 150 C/dm$^2$ or greater since it becomes possible to form uniform recessed portions at a high density. Meanwhile, the peak current density is preferably 100 A/dm$^2$ or lower, the average current density is preferably 40 A/dm$^2$ or lower, and the quantity of electricity is preferably 400 C/dm$^2$ or less.

[Metal coating step]

In the present invention, the method for manufacturing an aluminum plate preferably has a metal coating step in which part or all of the surfaces of the aluminum substrate including at least the inner walls of the through-holes are coated with a metal other than aluminum after the above-described membrane-removing step since it is possible to adjust the average opening diameter of the through-holes formed by means of the above-described electrolytic dissolution treatment to be small in a range of approximately 0.1 $\mu$m to 20 $\mu$m.

Here, "part or all of the surfaces of the aluminum substrate including at least the inner walls of the through-holes are coated with a metal other than aluminum" means that, out of all the surfaces of the aluminum substrate including the inner walls of the through-holes, at least the inner walls of the through-holes are coated, and the surfaces other than the inner walls may not be coated or may be wholly or partially coated.

[Boehmite treatment]

In the method for manufacturing an aluminum plate of the present invention, it is preferable to carry out a boehmite treatment after the above-described membrane-removing step since it is possible to adjust the average opening diameter of the through-holes formed by means of the above-described electrolytic dissolution treatment to be small in a range of approximately 0.1 to 20 $\mu$m.

Here, in the boehmite treatment, a reaction in which aluminum reacts with high-temperature water or superheated steam so as to generate a pseudoboehmite hydrated oxide membrane is used, and it is possible to generate a hydrated oxide membrane by, for example, adjusting the pH of water (for example, pure water or deionized water) (100°C to 400°C) to be 7 to 12 and immersing the aluminum substrate therein.

[Water washing treatment]

In the present invention, it is preferable to carry out water washing after the completion of the steps of the respective treatments described above. In the water washing, it is possible to use pure water, well water, tap water, or the like. In order to prevent the treatment liquids from being carried to the subsequent steps, a nipping device may be used.

[Collector for storage device]

A collector for a storage device of the present invention (hereinafter, also abbreviated as "the collector of the present invention") is a collector for a storage device constituted of the above-described aluminum plate of the present invention.

In the collector of the present invention, the aluminum plate has a plurality of through-holes in the thickness direction, and thus, for example, in a case in which the collector is used in lithium ion capacitors, pre-doping of lithium within a short period of time becomes possible, and it becomes possible to more uniformly disperse lithium. In addition, adhesiveness to active material layers or active charcoal becomes favorable, and it is possible to produce storage devices that are excellent in terms of productivity such as cycle characteristics, output characteristics, coating aptitude, and the like.

Particularly, in the collector of the present invention, in a case in which the average opening diameter of the through-holes in the aluminum plate is in a range of 8 $\mu$m to 30 $\mu$m, the predoping performance of lithium improves, adhesiveness to active material layers becomes more favorable, and it is possible to produce storage devices having improved cycle characteristics.

In addition, in a case in which the surface of the collector of the present invention is measured by means of Fourier transformation IR spectroscopy, there are cases in which peaks are observed at 930 to 962 cm$^{-1}$, and, in a case in which W. Vedder et al.: Trans. Faraday Soc., Vol. 65 (1969) p. 561 is taken into account, the peaks are considered to arise from the oxide membrane generated in the air.

Here, the measurement by means of Fourier transformation IR spectroscopy is carried out under the following conditions. First, the incidence angle is set to 75°, and only parallel polarization is monitored using a polarizer and a reflection method. Next, the resolution is set to 2 to 4 cm$^{-1}$, and the cumulated number is set to 1,000 times. A metal deposition mirror is used as the background, and peak locations are recorded from the measurement results.

[Storage device]

A storage device of the present invention is a storage device having a positive electrode, a negative electrode, and an electrolytic solution (electrolyte), in which the collector of the present invention is used in at least one of the positive electrode or the negative electrode.

Here, regarding the specific constitutions or applications of the storage device (particularly, secondary battery), it is possible to appropriately employ materials or applications described in Paragraphs "0090" to "0123" of JP2012-216513A,

In addition, in the present invention, regarding the oxide membrane that can be generated on the surface of the collector due to the storage of the storage device or the transportation environment, from the viewpoint of suppressing the generation of the oxide membrane or thinning the oxide membrane being generated as much as possible, the storage device is preferably stored in low-humidity environments. Specifically, the storage device is preferably stored in an environment in which the temperature is 25°C and the relative humidity is 0% to 20%. Examples of the method for forming the above-described low-humidity environments include a method in which a dehumidifier such as silica gel is packed together in the case of packing the storage device or the collector; a method in which the storage device or the collector is covered with a polyethylene and placed in a reduced-pressure state (for example, a substantial vacuum state); and the like. Meanwhile, the thickness of the oxide membrane that is generated in the case of storing the storage device at 25°C and a relative humidity of 8% is approximately 4 nm, and the thickness of the oxide membrane that is generated in the case of storing the storage device at 25°C and a relative humidity of 70% is approximately 7.2 nm.

<Positive electrode>

The positive electrode in which the collector of the present invention is used is a positive electrode having a positive electrode collector in which the collector of the present invention is used for a positive electrode and a layer including a positive electrode active material that is formed on the surface of the positive electrode collector (positive electrode active material layer).

Here, regarding the positive electrode active material, conductive assistants, binders, solvents, and the like which the positive electrode active material layer may include, it is possible to appropriately employ materials described in Paragraphs "0077" to "0088" of JP2012-216513A.

<Negative electrode>

The negative electrode in which the collector of the present invention is used is a negative electrode having a negative electrode collector in which the collector of the present invention is used for a negative electrode and a layer including a negative electrode active material that is formed on the surface of the negative electrode collector.

Here, regarding the negative electrode active material, it is possible to appropriately employ materials described in Paragraph "0089" of JP2012-216513A.

EXAMPLES

Hereinafter, the present invention will be described in more detail on the basis of examples. Materials, amounts used, fractions, treatment contents, treatment orders, and the like described in the following examples can be appropriately modified within the scope of the gist of the present invention. Therefore, the scope of the present invention should not be interpreted in a limited manner by the examples described below.

[Example 1]

<Production of aluminum substrate for collector>

Treatments described below were carried out on the surface of a roll-shaped aluminum substrate having an average thickness of 20 $\mu$m, a width of 300 mm, and a length of 1,000 m, thereby producing an aluminum plate.

Regarding the production of the aluminum substrate, in the beginning, a small amount of desired components were added to a molten metal of 99.99% of an aluminum material, the concentrations of a small amount of the respective components were adjusted, and a 500 mm-thick slab was cast by means of direct chill (DC) casting.

Next, both surfaces of the obtained slab were faced 20 mm, and then a thermal treatment was carried out at 500°C to 600°C.

Next, hot rolling was carried out, thereby rolling the slab to a thickness of 3 mm.

Next, cold rolling was carried out, thereby producing an aluminum substrate.

(a1) Aluminum hydroxide membrane-forming treatment (membrane-forming step)

An electrolytic treatment was carried out under a condition of the total electric quantity being 1,000 C/dm$^2$ using an electrolytic solution (the concentration of nitric acid was 1%, the concentration of sulfuric acid was 0.2%, and the concentration of aluminum was 0.5%) that had been stored at 50°C and the aluminum substrate as a negative electrode, thereby forming an aluminum hydroxide membrane on the aluminum substrate. Meanwhile, the electrolytic treatment was carried out using a direct current power source. Meanwhile, as shown in Table 2, the current density was set to 50 $A/dm^2$, and the electric quantity was set to 1,000 $C/dm^2$ or more.

After the formation of the aluminum hydroxide membrane, the aluminum hydroxide membrane was washed with water by means of spraying.

(b1) Electrolytic dissolution treatment (through-hole-forming step)

Next, an electrolytic treatment was carried out under a condition of the total electric quantity being 1,000 $C/dm^2$ using an electrolytic solution (the concentration of nitric acid was 1%, the concentration of sulfuric acid was 0.2%, and the concentration of aluminum was 0.5%) that had been stored at 50°C and the aluminum substrate as a negative electrode, thereby forming through-holes in the aluminum substrate and the aluminum hydroxide membrane. Meanwhile, the electrolytic treatment was carried out using a direct current power source. Meanwhile, as shown in Table 2, the current density was set to 25 $A/dm^2$, and the electric quantity was set to 1,000 $C/dm^2$ or more.

After the formation of the through-holes, the through-holes are washed with water by means of spraying and dried.

(c1) Removal treatment of aluminum hydroxide membranes (membrane-removing step)

Next, the aluminum substrate that had been subjected to the electrolytic dissolution treatment was immersed in an aqueous solution (liquid temperature: 35°C) having a sodium hydroxide concentration of 5% by mass and an aluminum ion concentration of 0.5% by mass for 30 seconds and then immersed in an aqueous solution (liquid temperature: 30°C) having a nitric acid concentration of 1% by mass and an aluminum ion concentration of 0.5% by mass for 20 seconds, thereby dissolving and removing the aluminum hydroxide membrane.

After that, the aluminum substrate was washed with water by means of spraying and was dried, thereby producing an aluminum plate having through-holes. Meanwhile, the thicknesses of the produced aluminum plates are shown in Table 2.

[Examples 2 to 14 and Comparative Examples 1 to 5]

Aluminum plates were produced using the same method as in Example 1 except for the fact that the thicknesses, the average opening diameters of through-holes, the average opening ratios, and the like of aluminum plates produced by changing the contents of Fe and the content ratios (Fe/Si) in aluminum substrates or the current densities or the electric quantities in aluminum hydroxide membrane-forming treatments or electrolytic dissolution treatments were changed to values shown in Table 2.

Meanwhile, the contents of Fe and the content ratios (Fe/Si) in the produced aluminum plates are the same value as the content of Fe and the content ratio (Fe/Si) of the aluminum substrate used for the production, and thus not shown in Table 2.

[Examples 15 to 20]

Aluminum plates were produced using the same method as in Example 1 except for the fact that masking was carried out using insulating material sheets so that the average opening ratios of through-holes at the peripheral portions (regions covering 50 mm from the end portion) of two sides opposite to each other in a direction (width direction) perpendicular to the transportation direction (rolling direction) of aluminum substrates in the electrolytic dissolution treatment (b1).

[Examples 21 to 24]

Aluminum plates were produced using the same method as in Example 1 except for the fact that the average opening diameters of through-holes, the average opening ratios, and the like of aluminum plates produced by changing the contents of Fe and the content ratios (Fe/Si) in aluminum substrates or the electric quantities in aluminum hydroxide membrane-forming treatments or electrolytic dissolution treatments were changed to values shown in Table 2.

Meanwhile, the contents of Fe and the content ratios (Fe/Si) in the produced aluminum plates are the same value as the content of Fe and the content ratio (Fe/Si) of the aluminum substrate used for the production, and thus not shown in Table 2.

The contents of Fe and the content ratios (Fe/Si) in the respective aluminum substrates used in Examples 1 to 24 and Comparative Examples 1 to 5 are shown in Table 2.

In addition, the conditions of the current densities and the electric quantities of the aluminum hydroxide membrane-forming treatments (membrane-forming steps) and the electrolytic dissolution treatments (through-hole-forming steps) carried out on the respective aluminum substrates are shown in Table 2.

In addition, regarding the thicknesses, the average opening diameters of the through-holes, the average opening ratios by the through-holes, the average opening ratios at the peripheral portions, the average opening diameters and occupancy ratios of the recess portions, the tensile strengths (strengths per unit width), and the breaking elongations of the respective aluminum plates produced in Examples 1 to 24 and Comparative Examples 1 to 5, the values measured using the above-described methods are shown in Table 2.

In addition, the arithmetic average roughness Ra of the surfaces of the respective aluminum plates produced in Examples 1 to 24 and Comparative Examples 1 to 5 was obtained by computing the average value of arithmetic average roughness values measured at five places using a contact-type (sensing pin-type) surface roughness meter (for example, SURFCOM 480A manufactured by Tokyo Seimitsu Co., Ltd.) under measurement conditions (ISO' 97 standards) described below. The measurement results are shown in Table 2.

<Measurement conditions>

- Sensing pin $\phi$: 2 $\mu$mR
- Cut-off wavelength: 0.8 mm
- Measurement rate: 0.3 mm/S
- Measurement length: 3 mm
- Integrated analysis software AccTee used

<Step suitability>

1,000 m-long roll-shaped samples were produced using the produced aluminum plates, and handling tests were carried out at a rate of 5 m/min using a delivery apparatus, a coating apparatus, and a winding apparatus.

As a result, regarding the occurrence of breaks, the presence or absence of breaks was checked, samples in which breaks were not generated were evaluated as "A", and samples in which breaks were generated were evaluated as "B".

In addition, regarding the occurrence of wrinkles and fractures, the presence or absence of wrinkles and fractures was checked, samples in which wrinkles and fractures were not generated were evaluated as "AA", samples in which wrinkles and fractures were slightly generated but step abnormality such as fractures did not occur were evaluated as "B", and samples in which wrinkles and fractures were generated and step abnormality such as fractures occurred were evaluated as "C".

<Working suitability>

The produced aluminum plates were cut to a short strip shape so as to be 300 mm in the transportation direction (rolling direction) of the aluminum substrate and 10 mm in the direction orthogonal to the transportation direction.

Eight cut aluminum plates were overlaid together and wound at an inner diameter $\phi$ of approximately 18 mm, the wound sample was pressed by a 5 kg weight for one minute and further pressed for 30 seconds, and the heights of the wound samples in a swollen state on a board were measured.

Samples in which the height after the press was 6 mm or less were evaluated as "A", and samples in which the height exceeded 6 mm were evaluated as "B".

<Device characteristics (adhesiveness)>

First, a slurry was prepared by adding and dispersing active charcoal powder (100 parts by mass) having a specific surface area of 1,950 $m^2$/g as an active material, acetylene black (10 parts by mass), an acrylic binder (7 parts by mass), and carboxymethyl cellulose (4 parts by mass) to and in water.

Next, the prepared slurry was applied onto both surfaces of an aluminum plate in which through-holes were formed using a die coater so as to obtain a total thickness of 200 $\mu$m and dried at 120°C for 30 minutes, thereby forming an active material layer on the surface of the aluminum plate.

The adhesiveness between the active material layer and the aluminum plate was measured using a peeling testing method.

Specifically, the aluminum plates on which the active material layer produced for the evaluation of the coatability was formed were cut to a width of 20 mm, thereby producing evaluation samples.

A double sided adhesive tape (double sided adhesive tape manufactured by 3M) was attached to one surface of an SUS plate, and an evaluation sample was attached to one surface of the double sided adhesive tape. A part of the SUS plate was fixed by one clamp of a tensile tester, the tip of the evaluation sample bent at 180 degrees was fixed by the other clamp, and a 180 degree peeling test was carried out. The tensile rate was set to 100 mm/min.

The surface of the adhesive tape and the surface of the aluminum plate for collectors after the peeling were visually evaluated.

Specifically, evaluation samples in which the area ratio of the active material layer remaining on the surface of the aluminum plate for collectors was 99% or more were evaluated as AA, evaluation samples in which the area ratio of the active material layer remaining on the surface of the aluminum plate for collectors was 95% or more and less than 99% were evaluated as A, and evaluation samples in which the area ratio of the active material layer remaining on the surface of the aluminum plate for collectors was 90% or more and less than 95% were evaluated as B.

[Table 2]

| Table 2 (first part) | Aluminum substrate | | Aluminum hydroxide membrane-forming treatment | | Electrolytic dissolution treatment (through-hole-forming step) | | Aluminum plate | | | | | | | Tensile characteristics | | Step suitability | | Working characteristi cs | Device character-isti cs |
|---|---|---|---|---|---|---|---|---|---|---|---|---|---|---|---|---|---|---|---|
| | | | | | | | | | | Recess portion | | | | | | | | |
| | Content of Fe (% by mass) | Content ratio (Fe/Si) | Current density (A/dm²) | Electric quantity (C/dm²) | Current density (A/dm²) | Electric quantity (C/dm²) | Thickness (µm) | Average opening diameter (µm) | Average opening ratio (%) | Average opening ratio at peripheral portions (%) | Average opening diameter (µm) | Occupancy (%) | Arithmetic average roughness Ra (µm) | Tensile strength (N/cm) | Breaking elongation (%) | Breaks | Wrinkles and fractures | Bending workability | Adhesiveness |
| Example 1 | 0.04 | 2.0 | 50 | 1000 | 25 | 1000 | 20 | 18 | 8 | 8 | 7 | 20 | 0.76 | 7 | 0.6 | A | A | A | A |
| Example 2 | 0.03 | 1.5 | 50 | 1000 | 25 | 1000 | 20 | 18 | 8 | 8 | 6 | 18 | 0.73 | 6 | 0.5 | A | A | A | A |
| Example 3 | 0.04 | 2.0 | 50 | 1000 | 25 | 1500 | 20 | 20 | 22 | 22 | 8 | 24 | 1.22 | 5 | 0.4 | A | A | A | A |
| Example 4 | 0.04 | 2.0 | 50 | 1000 | 30 | 1200 | 15 | 15 | 10 | 10 | 6 | 22 | 1.13 | 5 | 0.4 | A | A | A | A |
| Example 5 | 0.04 | 2.0 | 50 | 1000 | 30 | 1200 | 12 | 15 | 10 | 10 | 4 | 23 | 1.06 | 4 | 0.4 | A | A | A | A |
| Example 6 | 0.04 | 2.0 | 25 | 500 | 30 | 2000 | 12 | 12 | 30 | 30 | 3 | 67 | 2.35 | 3 | 0.3 | A | A | A | AA |
| Example 7 | 0.04 | 2.0 | 50 | 1500 | 20 | 1500 | 30 | 40 | 25 | 25 | 12 | 52 | 1.31 | 10 | 0.7 | A | A | A | AA |
| Example 8 | 0.04 | 2.0 | 50 | 1500 | 10 | 1200 | 40 | 64 | 15 | 15 | 16 | 37 | 1.15 | 12 | 1.2 | A | A | A | A |
| Example 9 | 0.04 | 2.0 | 20 | 500 | 40 | 800 | 40 | 5 | 3 | 3 | 5 | 12 | 0.62 | 28 | 1.4 | A | A | A | A |
| Example 10 | 0.04 | 2.0 | 20 | 500 | 40 | 1200 | 20 | 5 | 7 | 7 | 6 | 18 | 0.89 | 7 | 0.6 | A | A | A | A |

(continued)

| Table 2 (first part) | Aluminum substrate | | Aluminum hydroxide membrane-forming treatment | | Electrolytic dissolution treatment (through-hole-forming step) | | Aluminum plate | | | | | | Tensile characteristics | | Step suitability | | Working characteristics | Device characteristics |
|---|---|---|---|---|---|---|---|---|---|---|---|---|---|---|---|---|---|---|
| | | | | | | | | | | Recess portion | | | | | | | | |
| | Content of Fe (% by mass) | Content ratio (Fe/Si) | Current density (A/dm²) | Electric quantity (C/dm²) | Current density (A/dm²) | Electric quantity (C/dm²) | Thickness (μm) | Average opening diameter (μm) | Average opening ratio (%) | Average opening ratio at peripheral portions (%) | Average opening diameter (μm) | Occupancy (%) | Arithmetic average roughness Ra (μm) | Tensile strength (N/cm) | Breaking elongation (%) | Breaks | Wrinkles and fractures | Bending workability | Adhesiveness |
| Example 11 | 0.45 | 4.1 | 30 | 800 | 25 | 1200 | 20 | 17 | 11 | 11 | 2 | 20 | 0.92 | 8 | 0.8 | A | A | A | A |
| Example 12 | 1.44 | 36.0 | 50 | 1000 | 30 | 1000 | 20 | 16 | 9 | 9 | 0.5 | 25 | 0.92 | 14 | 1.1 | A | A | A | A |
| Example 13 | 0.70 | 1.1 | 50 | 1000 | 20 | 1500 | 20 | 27 | 21 | 21 | 1 | 41 | 1.22 | 11 | 0.6 | A | A | A | AA |
| Example 14 | 0.04 | 2.0 | 25 | 500 | 25 | 700 | 20 | 15 | 3 | 3 | 4 | 6 | 0.87 | 7 | 0.6 | A | A | A | A |

[Table 3]

| Table 2 (second part) | Aluminum substrate | | Aluminum hydroxide membrane-forming treatment | | Electrolytic dissolution treatment (through-hole-forming step) | | Aluminum plate | | | | | | | Tensile characteristics | | Step suitability | Working characteristics | Device characteristics |
|---|---|---|---|---|---|---|---|---|---|---|---|---|---|---|---|---|---|---|
| | | | | | | | | | | | Recess portion | | | | | | | |
| | Content of Fe (% by mass) | Content ratio Fe/Si | Current density A/dm² | Electric quantity C/dm² | Current density (A/dm²) | Electric quantity (C/dm²) | Thickness (μm) | Average opening diameter (μm) | Average opening ratio (%) | Average opening ratio at peripheral portions (%) | Average opening diameter (μm) | Occupancy (%) | Arithmetic average roughness Ra (μm) | Tensile strength (N/cm) | Breaking elongation (%) | Breaks | Wrinkles and fractures | Bending workability | Adhesiveness |
| Example 15 | 0.04 | 2.0 | 50 | 1000 | 25 | 1000 | 20 | 18 | 8 | 0 | 7 | 20 | 0.76 | 7 | 0.6 | A | AA | A | A |
| Example 16 | 0.04 | 2.0 | 50 | 1000 | 25 | 1000 | 20 | 18 | 8 | 0 | 7 | 20 | 0.76 | 7 | 0.6 | A | AA | A | A |
| Example 17 | 0.04 | 2.0 | 50 | 1000 | 25 | 1000 | 20 | 18 | 8 | 0 | 7 | 20 | 0.76 | 7 | 0.6 | A | AA | A | A |
| Example 18 | 0.04 | 2.0 | 50 | 1000 | 25 | 1000 | 20 | 18 | 8 | 2 | 7 | 20 | 0.76 | 7 | 0.6 | A | AA | A | A |
| Example 19 | 0.04 | 2.0 | 50 | 1000 | 25 | 1000 | 20 | 18 | 8 | 2 | 7 | 20 | 0.76 | 7 | 0.6 | A | AA | A | A |
| Example 20 | 0.04 | 2.0 | 50 | 1000 | 25 | 1000 | 20 | 18 | 8 | 2 | 7 | 20 | 0.76 | 7 | 0.6 | A | AA | A | A |
| Example 21 | 0.04 | 2.0 | 50 | 1000 | 25 | 500 | 20 | 18 | 8 | 8 | 3 | 1.2 | 0.42 | 7 | 0.6 | A | A | A | A |
| Example 22 | 0.04 | 2.0 | 50 | 1000 | 25 | 300 | 20 | 18 | 8 | 8 | 2 | 0.5 | 0.22 | 7 | 0.6 | A | A | A | A |
| Example 23 | 0.03 | 1.5 | 50 | 2000 | 25 | 300 | 20 | 7 | 6 | 1 | 8 | 0.3 | 0.23 | 6 | 0.5 | A | A | A | B |
| Example 24 | 0.03 | 1.5 | 50 | 700 | 25 | 500 | 20 | 4 | 4 | 2 | 1 | 0.8 | 0.17 | 6 | 0.5 | A | A | A | B |

(continued)

| Table 2 (second part) | Aluminum substrate | | Aluminum hydroxide membrane-forming treatment | | Electrolytic dissolution treatment (through-hole-forming step) | | Aluminum plate | | | | | | | Tensile characteristics | | Step suitability | | Working characteristics | Device characteristics |
|---|---|---|---|---|---|---|---|---|---|---|---|---|---|---|---|---|---|---|---|---|
| | | | | | | | | | | | Recess portion | | | | | | | | | |
| | Content of Fe (% by mass) | Content ratio Fe/Si | Current density A/dm² | Electric quantity C/dm² | Current density (A/dm²) | Electric quantity (C/dm²) | Thickness (μm) | Average opening diameter (μm) | Average opening ratio (%) | Average opening ratio at peripheral portions (%) | Average opening diameter (μm) | Occupancy (%) | Arithmetic average roughness Ra (μm) | Tensile strength (N/cm) | Breaking elongation (%) | Breaks | Wrinkles and fractures | Bending workability | Adhesiveness |
| Comparative Example 1 | 0.02 | 1.5 | 50 | 1000 | 25 | 1000 | 20 | 18 | 8 | 8 | 6 | 20 | 0.72 | 2 | 0.2 | B | B | A | A |
| Comparative Example 2 | 0.04 | 0.8 | 50 | 1000 | 25 | 1000 | 20 | 18 | 8 | 8 | 5 | 20 | 0.8 | 1 | 0.1 | B | B | A | A |
| Comparative Example 3 | 0.04 | 2.0 | 50 | 1000 | 5 | 2500 | 20 | 150 | 30 | 30 | 28 | 32 | 2.4 | 2 | 0.3 | B | B | A | A |
| Comparative Example 4 | 0.04 | 2.0 | 50 | 1000 | 15 | 2500 | 20 | 38 | 43 | 43 | 21 | 41 | 2.32 | 2 | 0.2 | B | B | A | AA |
| Comparative Example 5 | 0.04 | 2.0 | 10 | 500 | 50 | 1000 | 40 | 0.5 | 1 | 1 | 15 | 19 | 0.71 | 32 | 0.7 | A | A | B | A |

As shown in Table 2, it was found that, in both of Comparative Example 1 in which the content of Fe was less than 0.03% by mass or Comparative Example 2 in which the content ratio (Fe/Si) was less than 1.0, the tensile characteristics were poor and the step suitability was not satisfied.

Similarly, it was found that, in both of Comparative Example 3 in which the average opening diameter was more than 100 μm or Comparative Example 4 in which the average opening ratio was more than 30%, the tensile characteristics were poor and the step suitability was not satisfied.

In addition, it was found that, in Comparative Example 5 in which the average opening diameter was less than 1 μm and the average opening ratio was less than 2%, the working characteristics were poor.

On the other hand, in a case in which the average opening diameter of the through-holes is 0.1 to 100 μm, the average opening ratio was 2% to 30%, the content of Fe was 0.03% by mass or more, and the content ratio (Fe/Si) was 1.0 or more, the step suitability and the working characteristics became favorable (Examples 1 to 24).

Particularly, from the comparison between Examples 1 and Examples 15 to 20, it was found that, in a case in which the average opening ratio at the peripheral portions was 0% to 5%, the step suitability became more favorable.

In addition, from the comparison between Examples 2 and Example 23, it was found that, in a case in which the occupancy ratio of the recess portions which had an average opening diameter of 0.1 μm to 100 μm and were not penetrated was 0.5% or more, the device characteristics became favorable.

In addition, from the comparison between Examples 2 and Example 24, it was found that, in a case in which the arithmetic average roughness Ra of the surface was 0.2 μm or more the device characteristics became favorable.

The aluminum plate of the present invention can be used for, in addition to collectors for storage devices, heat-resistance filters, oil-collecting filters, electrostatic filters, antibacterial filters, liquid-reforming filters, water electrolysis filters, exhaust gas-purifying filters, food filtration filters, marine life filtration filters, dust filters, DNA filters, fine powder classification filters, solid-liquid separation filters, deodorant filters, photocatalyst carriers, hydrogen-generating catalyst carriers, enzymatic electrodes, carriers of noble metal-absorbers, antibacterial carriers, adsorbents, absorbents, optical filters, near infrared cut filters, soundproof and sound-absorbing materials, electromagnetic shields, gas diffusion layers and separators in direct fuel batteries, networks for microorganism storage container oxygen supply openings, construction materials, lighting applications, metallic decoration applications, and the like.

Explanation of References

1:    aluminum substrate
2:    aluminum hydroxide membrane
3:    aluminum substrate having through-holes
4:    aluminum hydroxide membrane having through-holes
5:    through-hole
10:   aluminum plate

**Claims**

1.  An aluminum plate (10) comprising:

    a plurality of through-holes (5) formed in a thickness direction,
    wherein a thickness of the aluminum plate (10) is 40 μm or less,
    an average opening diameter of the through-holes (5) is 0.1 to 100 μm,
    an average opening ratio by the through-holes (5) is 2% to 30%,
    a content of Fe is 0.03% by mass or more, and a ratio of the content of Fe to a content of Si is 1.0 or more.

2.  The aluminum plate (10) according to claim 1,
    wherein recess portions which have an average opening diameter of 0.1 μm to 100 μm and are not penetrated are provided on at least one surface, and an occupancy ratio of the recess portions is 0.5% or more.

3.  The aluminum plate (10) according to claim 1 or 2,
    wherein an arithmetic average roughness Ra of the surface is 0.2 μm or more.

4.  The aluminum plate (10) according to anyone of claims 1 to 3,

wherein the aluminum plate (10) has a rectangular shape or a square shape, and
the average opening ratio by the through-holes (5) is 0% to 5% at peripheral portions (3a) of at least one pair of opposite sides out of two pairs of the opposite sides,
here, the peripheral portion (3a) refers to a region covering 50 mm from an end portion of the aluminum plate (10) which constitutes a side.

5. The aluminum plate (10) according to anyone of claims 1 to 3,

wherein the aluminum plate (10) has a rectangular shape, and
the average opening ratio by the through-holes (5) is 0% to 5% at peripheral portions (3a) of two opposite sides in a width direction,
here, the peripheral portion (3a) refers to a region covering 50 mm from an end portion of the aluminum plate (10) which constitutes a side.

6. The aluminum plate (10) according to anyone of claims 1 to 3,

wherein the aluminum plate (10) has a roll shape, and
the average opening ratio by the through-holes (5) is 0% to 5% at peripheral portions (3a) of two opposite sides in an axial direction of the roll,
here, the peripheral portion (3a) refers to a region covering 50 mm from an end portion of the aluminum plate (10) which constitutes a side.

7. A collector for a storage device made of an aluminum plate (10) having a plurality of through-holes (5) in a thickness direction,
wherein the aluminum plate (10) is the aluminum plate (10) according to any one of claims 1 to 6.


**Patentansprüche**

1. Aluminiumplatte (10), umfassend:

eine Vielzahl von Durchgangslöchern (5), die in einer Dickenrichtung ausgebildet sind,
wobei eine Dicke der Aluminiumplatte (10) 40$\mu$m oder weniger beträgt,
ein mittlerer Öffnungsdurchmesser der Durchgangslöcher (5) 0,1 bis 100 $\mu$m beträgt,
eine mittlere Öffnungsrate durch die Durchgangslöcher (5) bei 2% bis 30% liegt,
der Fe-Gehalt 0,03 Massen-% oder mehr beträgt und das Verhältnis des Fe-Gehalts zum Si-Gehalt 1,0 oder mehr beträgt.

2. Aluminiumplatte (10) gemäß Anspruch 1,
worin Vertiefungsbereiche, die einen mittleren Öffnungsdurchmesser von 0,1 m bis 100 $\mu$m aufweisen und nicht durchdringen, auf mindestens einer Oberfläche vorgesehen sind und ein Belegungsanteil der Vertiefungsbereiche 0,5% oder mehr beträgt.

3. Aluminiumplatte (10) gemäß Anspruch 1 oder 2,
worin die arithmetische mittlere Rauheit Ra der Oberfläche 0,2 $\mu$m oder mehr beträgt.

4. Aluminiumplatte (10) gemäß einem der Ansprüche 1 bis 3,

worin die Aluminiumplatte (10) eine rechteckige Form oder eine quadratische Form hat und
an peripheren Abschnitten (3a) von mindestens einem Paar gegenüberliegender Seiten von zwei Paaren gegenüberliegender Seiten die mittlere Öffnungsrate durch die Durchgangslöcher (5) 0 % bis 5 % beträgt,
worin sich der periphere Abschnitt (3a) auf einen Bereich bezieht, der 50 mm von einem Endteil der Aluminiumplatte (10) bedeckt, der eine Seite bildet.

5. Aluminiumplatte (10) gemäß einem der Ansprüche 1 bis 3,

worin die Aluminiumplatte (10) eine rechteckige Form hat, und
die mittlere Öffnungsrate durch die Durchgangslöcher (5) an peripheren Abschnitten (3a) von zwei gegenüberliegenden Seiten in Breitenrichtung 0 % bis 5 % beträgt,
worin sich der periphere Abschnitt (3a) auf einen Bereich bezieht, der 50 mm von einem Endteil der Aluminiumplatte (10) bedeckt, der eine Seite bildet.

**6.** Aluminiumplatte (10) gemäß einem der Ansprüche 1 bis 3,

worin die Aluminiumplatte (10) eine Walzenform hat und
die mittlere Öffnungsrate durch die Durchgangslöcher (5) an peripheren Abschnitten (3a) von zwei gegenüberliegenden Seiten in einer axialen Richtung der Walze 0 % bis 5 % beträgt,
worin sich der periphere Abschnitt (3a) auf einen Bereich bezieht, der 50 mm von einem Endteil der Aluminiumplatte (10) bedeckt, der eine Seite bildet.

**7.** Kollektor für eine Speichervorrichtung, hergestellt aus einer Aluminiumplatte (10) mit einer Vielzahl von Durchgangslöchern (5) in einer Dickenrichtung,
worin die Aluminiumplatte (10) die Aluminiumplatte (10) gemäß einem der Ansprüche 1 bis 6 ist.

## Revendications

**1.** Plaque d'aluminium (10) comprenant :

une pluralité de trous débouchants (5) formés dans une direction de l'épaisseur,
dans laquelle une épaisseur de la plaque d'aluminium (10) est de 40 $\mu$m ou moins,
un diamètre d'ouverture moyen des trous débouchants (5) est de 0,1 à 100 $\mu$m,
un rapport d'ouverture moyen par les trous débouchants (5) est de 2 % à 30 %,
une teneur en Fe est de 0,03 % en masse ou plus, et un rapport de la teneur en Fe à une teneur en Si est de 1,0 ou plus.

**2.** Plaque d'aluminium (10) selon la revendication 1,
dans laquelle des parties en creux qui ont un diamètre d'ouverture moyen de 0,1 $\mu$m à 100 $\mu$m et ne sont pas pénétrées sont fournies sur au moins une surface, et un rapport d'occupation des parties en creux est de 0,5 % ou plus.

**3.** Plaque d'aluminium (10) selon la revendication 1 ou 2,
dans laquelle une rugosité moyenne arithmétique Ra de la surface est de 0,2 $\mu$m ou plus.

**4.** Plaque d'aluminium (10) selon l'une quelconque des revendications 1 à 3,
dans laquelle la plaque d'aluminium (10) a une forme rectangulaire ou une forme carrée, et
le rapport d'ouverture moyen par les trous débouchants (5) est de 0 % à 5 % au niveau de parties périphériques (3a) d'au moins une paire de côtés opposés de deux paires des côtés opposés,
ici, la partie périphérique (3a) fait référence à une région couvrant 50 mm depuis une partie d'extrémité de la plaque d'aluminium (10) qui constitue un côté.

**5.** Plaque d'aluminium (10) selon l'une quelconque des revendications 1 à 3,
dans laquelle la plaque d'aluminium (10) a une forme rectangulaire, et
le rapport d'ouverture moyen par les trous débouchants (5) est de 0 % à 5 % au niveau de parties périphériques (3a) de deux côtés opposés dans une direction de la largeur,
ici, la partie périphérique (3a) fait référence à une région couvrant 50 mm depuis une partie d'extrémité de la plaque d'aluminium (10) qui constitue un côté.

**6.** Plaque d'aluminium (10) selon l'une quelconque des revendications 1 à 3,
dans laquelle la plaque d'aluminium (10) a une forme de rouleau, et
le rapport d'ouverture moyen par les trous débouchants (5) est de 0 % à 5 % au niveau de parties périphériques (3a) de deux côtés opposés dans une direction axiale du rouleau,
ici, la partie périphérique (3a) fait référence à une région couvrant 50 mm depuis une partie d'extrémité de la plaque d'aluminium (10) qui constitue un côté.

**7.** Collecteur pour un dispositif de stockage constitué d'une plaque d'aluminium (10) ayant une pluralité de trous débouchants (5) dans une direction de l'épaisseur,

dans lequel la plaque d'aluminium (10) est la plaque d'aluminium (10) selon l'une quelconque des revendications 1 à 6.

FIG. 1A

FIG. 1B

## FIG. 2A

## FIG. 2B

## FIG. 3A

## FIG. 3B

## FIG. 3C

## FIG. 3D

## FIG. 3E

## FIG. 4A

1

## FIG. 4B

2
1
2

## FIG. 4C

5
4
3
4

## FIG. 4D

5
10
3

## FIG. 4E

5
10
3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011004777 A
- US 2012219817 A1
- EP 2555289 A1
- JP 2011201123 A
- US 4671859 A
- US 4661219 A
- US 4618405 A
- US 4600482 A
- US 4566960 A
- US 4566958 A
- US 4566959 A
- US 4416972 A
- US 4374710 A
- US 4336113 A
- US 4184932 A
- JP 2012216513 A

**Non-patent literature cited in the description**

- **W. VEDDER et al.** *Trans. Faraday Soc.,* 1969, vol. 65, 561